(19) Europäisches Patentamt
European Patent Office
Office européen des brevets

(11) **EP 2 599 628 B1**

(12) **EUROPEAN PATENT SPECIFICATION**

(45) Date of publication and mention
of the grant of the patent:
**31.01.2018 Bulletin 2018/05**

(51) Int Cl.:
**B32B 27/32** (2006.01)   **G09F 3/10** (2006.01)

(21) Application number: **12194941.6**

(22) Date of filing: **30.11.2012**

(54) **Plastic films**

Kunststofffolien

Films en plastique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2011 IT MI20112205**

(43) Date of publication of application:
**05.06.2013 Bulletin 2013/23**

(73) Proprietor: **Irplast S.p.A.**
**50053 Empoli (FI) (IT)**

(72) Inventors:
• **Di Costanzo, Carmelo**
**66034 Lanciano (Chieti) (IT)**
• **Tiberini, Giuseppe**
**66010 Gessopalena (Chieti) (IT)**
• **Antidormi, Giulia**
**20127 Milano (IT)**
• **Soluri, Giacomo**
**50053 Empoli (Firenze) (IT)**

(74) Representative: **Rossetti, Elena**
**BUGNION S.p.A.**
**Via di Corticella 87**
**40128 Bologna (IT)**

(56) References cited:
**US-A1- 2002 032 295     US-A1- 2009 053 513
US-A1- 2011 281 096**

• **BREIL J: "New High-Grade S-BOPP and S-BOPET
Film Types Produced with the Linear Motor
Stretching Technology", SPECIALTY PLASTICS
FILMS '99 GLOBAL FILM RESINS, MARKETS,
APPLICATIONS 15TH ANNUAL WORLD
CONGRESS,, 13 December 1999 (1999-12-13),
pages 1-22, XP007920347,**
• **BREIL J: "LISIM Linear Motor Simultaneous
Stretching Technology", PRESENTATION AT
CMM INTERNATIONAL CONFERENCE,, 16 April
1997 (1997-04-16), pages 1-14, XP007920353,**

**Description**

The present invention relates to the use of polyolefin-based films from rolls to obtain labels to be used in high speed labelling machines, the so called roll-fed application, higher than 8,000 up to about 75,000 containers/hour, preferably 15,000 to 60,000, the films having a thickness in the range from 10 to 22 $\mu$m, preferably from 14 to 20 $\mu$m, combined with a flexural rigidity (N.mm) in the range $0.5 \times 10^{-2}$-$4.5 \times 10^{-2}$ neglecting a constant $1/[12 \times (1-v^2)]$ wherein v is the Poisson modulus related to the used polymer, v being of the order of 0.2-0.4 for polyolefins.

More in particular the films of the present invention are preferably multilayer films with at least two layers, preferably three or more, generally 5 or 7 layers, etc., wherein the core layer is a propylene homopolymer with an amount of extractables in n-hexane (50°C for two hours) lower than 10% by weight, preferably lower than 5%, still more preferably lower than 2%, as determined according to the FDA 177 1520 standard, combined with a dimensional stability in machine direction (MD), determined according to the OPMA TC 4 standard (Oriented Polypropylene Manufacturer Association) at 130°C for 5 minutes in air ranging from 0 and -10%, preferably from -4 to -8.5%, and in transverse direction (TD) from -4 to +4%, preferably between 0 and +2.5%.

The films of the present invention are preferably obtainable by extrusion of polyolefin polymer granules up to obtain rools having very high lengths, even of the order of 20,000 meters. These are called extrusion mother rolls (neutral film). From these, by cutting, extrusion daughter rolls are obtained, preferably the diameter is up to 1,000 mm.

In the transformation step extrusion daughter rolls are used, called in this step transformation mother rolls, subjected to a printing and a cutting process to obtain the rolls for end use for application to containers.

The polyolefin-based films used in the present invention are preferably multilayers based on propylene homopolymer in the core and on propylene homopolymers and/or copolymers in the skin layers. The latter being equal to or different from each other. One of the skin layers, called in the present invention skin 1, is subjected to surface treatments for a good anchoring of inks to the film in the printing step.

The use of plastic films to obtain labels from rolls to be applied to containers in high speed manufacturing processes is known in the prior art. In the roll-fed labelling process, the printed plastic film adhesive-free roll is unwound and cut to size for obtaining labels. Then the machine applies the adhesive, for example of hot-melt type, on the label and applies it on the container.

Patent application US 2002/0032295 relates to a propylene homopolymer film having improved barrier properties to steam and oxygen and improved mechanical properties. The film is biaxially oriented, has an isotactic index of at least 95% and does not contain hydrocarbon resins. The elastic modulus in longitudinal direction (MD) is higher than 2,500 N/mm$^2$ and in transversal direction (TD) is higher than 4,000 N/mm$^2$. In this patent application no indication is given that the film can be used to form labels.

USP 5,118,566 discloses a biaxially oriented polypropylene film, used as adhesive tape, endowed with high mechanical resistance properties, the film comprising (% by weight) from 69 to 94.99% of a polyolefin, 5-35% of an hydrocarbon resin having softening point in the range 70°C-170°C and from 0.01% to 1% of a nucleating agent. In this patent there is no mention that the tape can be used to form labels.

Patent application EP 79,520 discloses a polypropylene plastic film comprising a natural or synthetic resin with a softening point from 70 to 170°C in an amount from 1 to 30% by weight with respect to the total weight of the film, an elastic modulus in MD in the range 4,000 - 6,000 N/mm$^2$, the film after extrusion and cooling is subjected to three stretching steps two of which are in MD. The film is used for packaging and as insulating material for condensers and as adhesive tape. No indication is given that these films can be used as labels.

USP 4,595,738 discloses isotactic polypropylene films oriented by simultaneous biaxial stretching, wherein the stretching ratio is at least 1:45, with low residual tensile stress in MD, a specific puncture resistance and certain elongation factors. The film is particularly suitable to store optical or acoustic information, as adhesive tape for packaging or as layer for laminates. No indication is given that the disclosed films can be used as labels.

USP 3,937,762 describes a polymeric composition and thermoplastic films obtained therefrom having improved physical properties, comprising a polyolefin containing a lower amount of a resin formed of a random multipolymer of a mixture comprising pentadiene 1,3 and at least one other monomer having one ethylenic unsaturation. The resin amount ranges from 5 to 40% by weight. These compositions are used in the preparation of oriented polypropylene films and of ethylene-propylene copolymers showing a lower sealing temperature and a wider range of sealing temperatures and an increased modulus with respect to the films not containing the random multipolymer additive. No indications are given that the disclosed films can be used as labels.

USP 4,921,749 describes a film having an improved seal strength and improved barrier properties, comprising a core formed of 70%-97% by weight of a polyolefin and from 3 to 30% by weight of a low molecular weight resin different from polyolefins, for example an hydrogenated resin. A skin film is applied on at least one surface of the core, the ratio by weight between the skin film and the core ranges from 1% to 20%. The skin layer comprises a random copolymer formed of 80% to 99% by weight of propylene and from 1 to 20% of ethylene. The resin has a molecular weight lower than 5,000 and a softening point from 60°C to 180°C. These films are used in heat-seal packaging in particular in place of cellophane. In this patent there is no indication that the film can be used for labels.

Patent application US 2003/0148,119 relates to a heat-sealable coextruded oriented polyolefin multilayer film having at least one propylene polymer with high crystallinity and with an isotactic index higher than 95% by weight mixed with an hydrocarbon resin up to 10% by weight. The film can be subjected to corona, flame, plasma treatment on one surface. On the other surface there is a heat-sealing layer. The film shows a very good resistance to distortion caused by food oils and, having good barrier properties to said oils, is used in the snack food packaging industry. In this patent application no indication is given that the film can be used for labels.

Patent application CA 2,047,469 describes a heat-sealable film comprising a base polypropylene layer and an hydrocarbon resin having a softening point of at least 140°C, and at least one top layer comprising (a) an ethylene/propylene copolymer having an ethylene content not higher than about 10% by weight, (b) a propylene/1-butene copolymer, (c) a propylene/ethylene/alpha-olefin terpolymer or a blend of two or more of the above polymers. At least one of these layers contains an anti-blocking agent or a lubricant. The film shows better barrier properties to steam and oxygen, good slip properties and low shrinkage values. In this patent application no indication is given that the film can be used for labels.

There is the continuous need from the industries using labels to reduce the amount of plastic material also for environmental problems. As a matter of fact efforts are undertaken to use a lower amount of plastic materials to reduce the energy consumption requested for their production. In this way the environmental sustainability is remarkably improved as a lower amount of $CO_2$ is produced and therefore also a lower green house effect (GWP) is obtained.

Furthermore when the labels are at the end of their life cycle, they must be disposed of. The market trend is to reduce the amount of commercial packages, and therefore also of labels, to be recycled and/or disposed of. It is well known in fact that disposal involves high costs.

It should be considered that the transformation industries require to have available films from rolls (extrusion daughter rolls) having a length of about 20,000 meters from which to obtain printed and cut rolls, having a maximum outer diameter of 600 mm for label roll-fed application. These are the standard sizes required for all the labelling machines used at present.

The polypropylene labels in commerce for this application are wound in rolls having a film thickness from 30 to 40 $\mu$m.

The Applicant has unexpectedly and surprisingly found that the above technical problem on the use of a lower amount of plastics for reducing the energy consumption necessary for their manufacture and reducing the amount of $CO_2$ and thus to reach a lower green house effect (GWP) and a lower amount of labels to be recycled/disposed of at the end of their life cycle, has been solved according to the present invention by the use of a film, as defined below, based on polyolefins from rolls for preparing labels to be used in high speed labelling machines (roll-fed applications) higher than 8,000 up to about 75,000 containers/hour, with a number of scraps during label application to containers lower than 2%, preferably lower than 1%, more preferably lower than 0.3%, even more preferably lower than 0.1%, combined with a number of scraps during the transformation step lower than 5% preferably lower than 3%, net of trimmed edges.

It is an object of the present invention the use of polyolefin-based plastic films, for obtaining labels from rolls for high speed roll-fed applications higher than about 8,000 up to about 75,000 containers/hour, the films having a thickness comprised between 10 and 22 $\mu$m, flexural rigidity (N.mm) in the range $0.5 \times 10^{-2}$-$4.5 \times 10^{-2}$ neglecting a constant $1/[12 \times (1-v^2)]$ wherein v being the Poisson modulus having a value of about 0.2-0.4 for polyolefins, elongation at break (%) in MD, determined according to ASTM D 882 lower than 130%, dimensional stability, determined according to the OPMA TC 4 standard at 130°C for 5 minutes in air, in MD in the range from 0 to -10% and in TD from -4 to + 4%, with a number of scraps during label application to containers lower than 2%, preferably lower than 1%, more preferably lower than 0.3%, even more preferably lower than 0.1%, combined with a number of scraps during the transformation step lower than 5% preferably lower than 3%, net of trimmed edges. The latter are not considered in calculating scraps as the percentage of trimmed edges depends on the width of the film that is used.

Examples of containers are bottles, cans, etc.

Preferably the films have elastic modulus (N/mm$^2$) in TD lower than 3,500 and in MD (N/mm$^2$) from 2,600 to 3,800 preferably from 3,000 to 3,600.

Preferably the speed of the roll-fed application ranges from 15,000 to 60,000 containers/hour. Preferably the film thickness is in the range from 14 to 20 $\mu$m.

Preferably the flexural rigidity (N.mm) is in the range from $0.7 \times 10^{-2}$ to $3.5 \times 10^{-2}$, more preferably from $0.8 \times 10^{-2}$ to $3.0 \times 10^{-2}$, still more preferably from $0.9 \times 10^{-2}$ to $2.8 \times 10^{-2}$.

Preferably the elongation at break in MD is lower than 120%, more preferably lower than 110%.

Preferably the elongation at break in MD $\geq$80%, more preferably $\geq$90%.

Preferably the elastic modulus in TD is $\geq$2,500, more preferably $\geq$2,700 N/mm$^2$.

Preferably the tensile strength at break ranges from 228 to 170 N/mm$^2$.

Preferably the dimensional stability of the film of the invention in MD is in the range from -4 to -8.5% and in TD from 0 to +2.5%.

The polyolefin-based plastic films are preferably based on propylene homopolymers having an extractable amount in n-hexane (50°C for two hours) lower than 10% by weight, as determined according to the FDA 177 1520 standard and preferably a melt flow index (MFI)in the range from 1.0-10 g/10 min (230°C 10 min - load 2.16 Kg ASTM D1238).

With the plastic films of the present invention the label is obtained after printing and cutting the roll and on the roll-fed line the machine applies the adhesive, for example of hot melt type, according to vertical sectors on the initial and end part of the label for its correct application on the container.

Preferably the propylene homopolymers have an amount of extractables, determined with the above method, lower than 5%, more preferably lower than 2%.

The films of the present invention are preferably in multilayer films, comprising:

> a core: propylene homopolymers,
> skin layers, equal to or different from each other, based on propylene homopolymers and/or olefinic copolymers.

The homopolymers used in the core and in outer layers are preferably different from each other.

The olefinic copolymers of the skin layers are selected from copolymers of propylene with at least another at least one ethylenic unsaturation containing comonomer, preferably selected from ethylene and alpha-olefins having a number of carbon atoms ranging from 4 to 12, the total comonomer amount ranging from 0.5 to 25% by weight, preferably from 1 to 7% by weight on the total polymer monomers.

The comonomers containing at least one ethylenic unsaturation are for example ethylene, butene, hexene, octene, decene, dodecene. Preferably the comonomer is ethylene. Generally the copolymers contain (% by moles) ethylene from 0 to 33%, preferably 3-15%, more preferably 5-10%. The alpha-olefinic monomer (% by moles) is comprised in the range 0-10%, preferably 0.5-6%.

Further comonomers (% by moles) that can be present in the copolymers are cyclopentadiene and terpenes, in an amount by moles up to 10%, preferably 0-5%.

The propylene copolymers have an amount of extractables lower than 10% by weight, preferably lower than 3%.

The melt flow index of the propylene copolymers preferably ranges from 1 to 30 g/10 min (230°C 10 min load 2.16 Kg ASTM D1238).

As said, preferably the articles to be labelled are bottles having a volume comprised between 0.25 and 2.5 liter, preferably from 0.5 to 1.5 liter

Preferably in the present invention polyolefin-based plastic films, preferably propylene polymers, are used to obtain labels in roll for roll-fed applications at the above reported speeds, having:

> thickness in the range 14-20 $\mu$m, flexural rigidity in the range $0.7 \times 10^{-2}$-$3.5 \times 10^{-2}$, elongation at break in MD determined according to ASTM D 882 lower than 120%, elastic modulus (N/mm$^2$) in TD lower than 3,500, in MD in the range 2,600-3,800, the dimensional stability of the multilayer film in MD is in the range from -4 to -8.5%, and in TD from 0 to + 2.5%.

More preferably, the polyolefin-based plastic films, preferably propylene polymers, have:

> thickness in the range 14-20 $\mu$m, flexural rigidity in the range $0.7 \times 10^{-2}$-$3.5 \times 10^{-2}$, elongation at break in MD determined according to ASTM D 882 lower than 120% and $\geq$90%, elastic modulus (N/mm$^2$) in TD lower than 3,500 and $\geq$2,700, in MD in the range 2,600-3,800, the tensile strength at break ranges from 228 to 170 N/mm$^2$, the dimensional stability of the multilayer film in MD is in the range from -4 to -8.5%, and in TD from 0 to + 2.5%.

The film is preferably multilayer and comprises a core: propylene homopolymers as defined above, skin layers, equal to or different from each others: propylene homopolymers or propylene copolymers having the above characteristics.

The Applicant has unexpectedly and surprisingly found that it is possible to obtain labels from roll for high speed roll-fed applications as indicated above by using films having a very low thickness with respect to the commercial standard films at present used even though the labels of the present invention have a rigidity remarkably lower than the commercial ones. Still more unexpected and surprising is that from the films of the invention it was possible to obtain labels substantially defect-free (wrinkling/ creasing/folding) and curling-free, combined with a number of scraps in the transformation step lower than 5% preferably lower than 3%, net of trimmed edges, and in the label roll fed application to containers lower than 2%, preferably lower than 1%, more preferably lower than 0.3%, even more preferably lower than 0.1%, even using line speeds in the range from about 15,000 to about 75,000 containers/hour.

The bottles have preferably a cylindrical or square or oval shape; the surface where the label is applied is preferably smooth. The combination of properties of the films of the invention allows to use them also in labelling machines wherein the film is subjected to tensions during the application. Of course the film can be used also in labelling machines wherein the film is not subjected to strong tensions.

The film of the present invention, if desired, can be subjected to adhesive sector spreading to obtain preadhesivized labels to be applied directly in the machine without using a hot glue applicator. The adhesive is preferably pressure sensitive. These sector preadhesivized films are for example obtained by using the processes described in EP 1,074,593 or EP 928,273, herein incorporated by reference.

The film, preferably multilayer, of the invention is oriented at least in one direction, preferably it is bioriented.

The skin layer can comprise optional components selected from slip agents, anti-blocking agents; the core can comprise optional components selected from antistatic agents, dyestuffs, hydrocarbon resins, olefinic copolymers, etc. For example for preparing transparent films, preferably no dyestuff is used, while for films printed in the outer (skin) layer with a high covering power (higher optical density and lower film transmittance) dyestuffs are used, in particular masterbatches based on $TiO_2$.

As slip agents the following ones can be mentioned: higher aliphatic acid amides, higher aliphatic acid esters, waxes, salts of fatty acids with metals and polydimethyl siloxanes. The amount is the one generally used in films.

As antiblocking agents, inorganic compounds, as silicon dioxide, calcium carbonate and the like can be mentioned. The amount is generally comprised between about 0.1 and about 0.5% by weight with respect to the layer weight.

As antistatic agents, aliphatic tertiary amines with saturated linear chains containing an aliphatic $C_{10}$-$C_{20}$ chain and substituted with ω-hydroxy-($C_1$-$C_4$) alkyl groups, can be mentioned. Among tertiary amines, N,N-bis(2-hydroxyethyl) alkylamines containing $C_{10}$-$C_{20}$, preferably $C_{12}$-$C_{18}$ alkyl groups, can be mentioned. The amount of antistatic agent is generally comprised between about 0.05% and about 0.2% with respect to the layer weight.

When a multilayer film is used, in the core preferably hydrogenated hydrocarbon resins, having preferably a softening point determined according to ASTM E28 ranging from 130°C to about 180°C, can be added in amounts ranging from about 2% to 40% by weight, preferably lower than 20%, still more preferably from 4 to 12%, the percentages being based on the total weight of the olefinic polymer plus the hydrocarbon resin. Preferably the hydrocarbon resin is a low molecular weight synthetic resin having a softening point between about 130°C and 160°C; the number average molecular weight preferably ranges from 200 to 1,000. Hydrocarbon resins of this type preferably comprise one or more of the following monomers: styrene, methylstyrene, vinyltoluene, indene, pentadiene, cyclopentadiene and the like. Hydrogenated resins of cyclopentadiene are preferred. The hydrocarbon resin, if desired, can be added also in the skin layers.

In the multilayer film of the present invention, preferably in the core, propylene-based olefinic copolymers as indicated above can be added, or copolymers of ethylene with one or more linear or branched alpha olefins from 3 to 20 carbon atoms, optionally in the presence of other comonomers, containing more than one double bond in addition to the alpha-olefinic double bond, conjugated or not, from 4 to 20 carbon atoms, or cyclic olefins wherein the ring has 5 or 6 carbon atoms, preferably cycloalkenes, such as vinylcyclohexene; aromatic olefins such as cyclopentadiene; vinylaromatic such as styrene. The alpha-olefinic and dienic monomers can be selected from those indicated above, propylene included. The total amount of comonomers (% by moles) ranges from 5 to 50%, preferably from 10 to 25%, the number average molecular weight being preferably in the range 300-25,000.

The amount of olefinic copolymers (% by weight), added in the film or in the core, ranges from 0 to 20% with respect to the amount of propylene homopolymers of the film or of the core, preferably from 0 to 10%, still more preferably 0-3%.

In the case of the multilayer film, instead of adding in the core said copolymers and/or hydrocarbon resins, intermediate layers can be used, made of copolymers and/or hydrocarbon resins, provided that the outer layers of the film of the present invention remain as above defined. The layer to be printed is preferably treated with known methods to modify the surface tension, to improve the anchorage of the printing inks and/or adhesives. Preferably corona, flame or plasma treatment is used.

The films of the invention can be obtained by known technologies for manufacturing films, preferably polyolefin-based multilayer films, in particular based on propylene homopolymers or propylene-based copolymers. A particularly preferred process is the simultaneous stretching technology Lisim®. This technology is described in several patents, as for example USP 4,853,602, USP 5,051,225.

The process for the manufacture of the multilayer films comprises the following steps:

- coextrusion of the multilayer sheet of the film, having a thickness preferably comprised between about 0.5 mm and about 4 mm;
- sheet cooling on the surface of a cooled chill roll dipped in a water bath, preferably at a temperature in the range 5-35°C;
- sheet heating, preferably by infrared rays, wherein the surface of the IR panels is at a temperature comprised between about 100°C and about 500°C;
- sheet stretching and orientation by a simultaneous process in MD and TD direction, preferably by fixing the sheet edges, having an higher thickness than the sheet, with a series of pliers/clamps independently driven by linear synchronous induction motors, wherein the set of pliers/clamps runs on divergent stretching rails;
the linear synchronous induction motors are fed with alternate currents, with phases and frequencies modulated so that the pliers/clamps follow a preprogrammed linear speed profile for obtaining the required stretching ratios in MD; wherein the MD stretching ratios are a function of the profile of the longitudinal linear speed and the TD stretching ratios are regulated by the distance (divergence) between the stretching rails;

- for the stretching steps a stretching frame comprising one or more sections, located inside an oven at temperatures comprised between about 150° and 190°C, is used;
- the MD longitudinal stretching ratios being comprised from about 4:1 to about 9:1 and the TD transversal stretching ratios from about 3:1 to about 8:1.
- heat setting in TD, preferably by converging the stretching rails in one or more sections of the stretching frame at temperatures of about 130°C-140°C, and heat setting in MD, obtained by decreasing the pliers linear speed.

With a good approximation, the MD stretching ratio can be considered equal to the ratio between the film speed at the outlet of the stretching frame and the film speed at the inlet of the film into the stretching frame. Depending on the set up of the stretching equipment, this ratio is equivalent to the ratio between the frequency of the alternate current fed to the linear electric mot
ors at the outlet of the stretching frame and the frequency of the alternate current fed to the linear motors at the inlet of the stretching frame.

The stretching ratio in TD can be considered with a good approximation equivalent to the ratio between the film width at the outlet of the stretching frame and the film width at the inlet of the stretching frame.

Positive values of the dimensional stability in TD of the films of the present invention resulted extremely useful during the printing step as they allow to remarkably reduce scraps during the transformation step.

It is a quite unexpected and surprising that by the preferred simultaneous stretching technology Lisim® it is possible to obtain a positive dimensional stability value (dilatation). As a matter of fact, with the conventional sequential stretching technology a negative value of dimensional stability is obtained. In the latter case, modifications in the printing step have to be introduced to take into account the film shrinkage in TD. Therefore the Lisim® simultaneous stretching technology allows to remarkably simplify the printing step, as no intervention is requested on the printing machine.

The films of the present invention are endowed of excellent mechanical properties as shown by their tensile properties (tensile strength at break, elastic modulus, elongation at break) determined according to ASTM D 882. The films of the invention have also good optical properties as shown by the gloss and haze values.

The films of the present invention after surface treatment (corona, flame, plasma) are printed by conventional techniques and used for roll-fed labelling.

A further object of the present invention are polyolefin-based plastic films as defined above. The plastic films of the present invention have an elastic modulus in TD lower than 3,500 N/mm$^2$, in MD in the range from 2,600 to 3,800 N/mm$^2$, preferably from 3,000 to 3,600 N/mm$^2$.

The films of the present invention are generally obtainable by extrusion of granules of polyolefinic polymers and the obtained films, preferably after having been oriented and heat set, are wound in rolls called extrusion mother rolls (neutral, i.e. untreated film). By cutting, extrusion daughter rolls are obtained therefrom. In the transformation step the extrusion daughter reels are used, that in this step are called transformation mother rolls and are subjected to printing and cutting processes to get the rolls of printed film for the end use.

A further object of the present invention are labels obtainable from the above plastic films.

The Applicant remarks that the films of the present invention allow to obtain advantages from an industrial point of view, as with rolls for roll-fed application having the same diameter of rolls of the commercial films, which generally show a thickness from 30 to 40 $\mu$m, it is possible to obtain a lower impact on the production, transportation and storage costs, as the roll film length is greater. This latter feature, the roll diameter being the same as that of commercial films, brings to fewer roll substitutions and therefore fewer machine downtimes, giving a higher yield on the labelling lines with a number of scraps lower than 2%, preferably lower than 1%, more preferably lower than 0.3%, even more preferably lower than 0.1%, combined with a number of scraps in the transformation step lower than 5% preferably lower than 3%, net of trimmed edges.

Surprisingly and unexpectedly, by using the thin films of the present invention for roll fed labeling application to container, no jamming or machine downtime have occurred at the high line speeds indicated above.

The following examples are given for illustrative purposes and are not limitative of the present invention.

## EXAMPLES

### Characterization

### Melt Flow Index (MFI)

The melt flow index was determined at 230°C for 10 min with a load of 2.16 Kg according to ISO 1133.

### Extractables amounts of propylene polymers

The extractables are determined by extracting a sample of the polymer with n-hexane at 50°C for two hours according to FDA 177 1520 Standard.

### Film dimensional stability

The film dimensional stability is determined according to OPMA TC 4 standard by heating a sample having 20 cm x 1 cm sizes at 130°C for 5 minutes in the air.
If the sample shrinks, the number of the dimensional stability is preceded by -, if the sample dilates, by +.

### Young modulus (elastic modulus)

The modulus of Young, or elastic modulus (N/mm$^2$) has been determined according to the ASTM D 882 standard both in MD direction and in TD direction.

### Elongation at break and tensile strength at break

The elongation at break and tensile strength at break (N/mm$^2$) of the film are determined by ASTM D 882.

### Flexural rigidity

The flexural rigidity, or rigidity (N.mm), is given by the following formula:

$$R = [E.d^3]/12(1-v^2)$$

wherein R is the rigidity, E the Young modulus and d is the thickness in mm. In the calculation of flexural rigidity calculation $v^2$ is neglected as it is very low compared to 1.

### Haze

The Haze values are determined according to ASTM D 1003.

### Gloss

The Gloss values are determined according to ASTM D 2457 standard.

### Scraps

In the transformation step scraps are calculated with reference to the weight of the starting film roll. In the application step scraps are calculated with reference to the number of containers discarded with respect to those obtained.

### FORMULATION EXAMPLES

### Process for the preparation of the film of the invention

The film has been obtained by coextruding through a flat head three polymeric layers, respectively, the core and the skin layers.
The core has been extruded at extruder temperatures in the range 235°C-255°C, the skin layers at extruder temperatures comprised between 260°C-275°C. The three layers have been coextruded in a flat head at the temperature of 245°C. The so obtained sheet has been cooled to a temperature of 25°C on a chill roll, partly dipped in a water bath having a temperature of 28°C. The chilled sheet passed through an infrared heating battery wherein the surface temperature of the heating panels was comprised between 200°C and 320°C. Then the sheet entered a simultaneous stretching oven Lisim® wherein:

the temperature set of the preheating zone was in the range 165°C-170°C;
the temperature set of the stretching zone was in the range 159°C-163°C;
the temperature set of the annealing zone was in the range 164°C-170°C;
the longitudinal and transversal stretching ratios at the outlet of the stretching frame were respectively of 7 and 6.5.
The so obtained film was flame treated on a surface obtaining a surface tension value $\geq$ 44 dyne/cm at t=0.

EXAMPLE 1

By the process above reported a multilayer film according to the invention was prepared, having thickness 19 $\mu$m and the following composition:

- core layer 100% by weight of PP homopolymer, MFI 2, (HP522H LyondellBasell® polymers) having thickness 17 $\mu$m,
- skin layer 1 (skin 1 flame surface treated, to be printed): 99% by weight of a PP homopolymer having MFI 2.0 (HP422H LyondelBasell® polymers), + 1% by weight of a polypropylene silica masterbatch (AB 6001PP Schulmann®-anti-block agent). Skin 1 thickness is 1 $\mu$m.
- skin layer 2 (skin 2, not surface treated): 93% by weight of PP homopolymer, + 6% by weight of slip agent ABVT34SC (Schulmann®) masterbatch based on silicone particles having a 2 $\mu$m diameter, + 1% by weight of a silica masterbatch with polypropylene carrier as in skin 1. Skin 2 thickness is 1 $\mu$m.

The characterization data are reported in Table 1.
The flexural rigidity of the film was 2.20x10$^{-2}$ N.mm.
The Young modulus of the film in TD direction was 2780 N/mm$^2$.

EXAMPLE 2

Example 1 was repeated but using in the core 90% by weight of propylene homopolymer of Example 1 + 10% by weight of masterbatch of amorphous hydrocarbon resins with polypropylene carrier Constab MA00929PP (see for example the technical card KafritGroup of July 2010).
The thickness of the core and of the skin layers was as in the film of example 1.
The characterization data are reported in Table 1.
The flexural rigidity of the film was 2.61x10$^{-2}$ N.mm.
The Young modulus of the film in TD direction was 3152 N/mm$^2$.

EXAMPLE 3

Example 2 was repeated but using in the core 89% by weight of propylene homopolymer of example 1, + 1% by weight of antistatic agent ASPA2446 (Schulmann®) masterbatch with propylene homopolymer carrier, instead of 90% by weight of propylene homopolymer.
In skin 2 a polypropylene ADSTIFHA612M (LyondellBasell®) having MFI=6 has been used. The core thickness was 14 $\mu$m, the thickness of each skin layer was 2.5 $\mu$m.
The characterization data are reported in Table 1.
The flexural rigidity of the film was 2.47x10$^{-2}$ N.mm.
The Young modulus of the film in TD direction was 3374 N/mm$^2$.

EXAMPLE 4

Example 3 was repeated but skin 1 was 100% by weight of propylene-ethylene copolymer with MFI=5.5.
Skin 2 was 94% by weight of propylene homopolymer + 6% by weight of masterbatch comprising the slip agent in polypropylene carrier as used in skin 2 of example 1.
The core thickness was of 17 $\mu$m, the thickness of each skin layer was 1 $\mu$m.
The characterization data are reported in Table 1.
The flexural rigidity of the film was 2.17x10$^{-2}$ N.mm.

The Young modulus of the film in TD direction was 2904 N/mm$^2$.

EXAMPLE 5

Example 4 was repeated but with skin 2 having the same composition as skin 2 of the film of example 3. The thickness of each of the three layers was as in the film of example 4.
The characterization data are reported in Table 1.
The flexural rigidity of the film was 2.24x10$^{-2}$ N.mm.
The Young modulus of the film in TD direction was 2928 N/mm$^2$.

EXAMPLE 6

Example 1 was repeated but the core was the same as in example 3 i.e., 94% by weight of PP homopolymer, + 5% by weight of the masterbatch of amorphous hydrocarbon resins with polypropylene carrier Constab® MA00929PP, + 1% anatistatic masterbatch. The thickness of each of the three layers was as in the film of example 4.
The characterization data are reported in Table 1.
The flexural rigidity of the film was 2.24x10$^{-2}$ N.mm.
The Young modulus of the film in TD direction was 2878 N/mm$^2$.

EXAMPLE 7

Example 6 was repeated but in the core 94% polypropylene was formed of 84% by weight of propylene homopolymer used in example 6 + 10% of reclaim (regranulated) propylene polymers. The thickness of each of the three layers was as in the film of example 4.
The characterization data are reported in Table 1.
The flexural rigidity of the film was 2.24x10$^{-2}$ N.mm.
The Young modulus of the film in TD direction was 3100 N/mm$^2$.

APPLICATION EXAMPLES

EXAMPLE 7A

The film of Example 7 was wound in a roll (extrusion mother roll) that was cut to obtain extrusion daughter rolls having width 630 mm and film length 22,000 m, external diameter 780 mm, density 0.91 g/cm$^3$, for the 2 colour reverse rotogravure printing for preparing labels to be applied on 0.5 liter PET bottles.
During the transformation step the roll film has been printed at a line speed of 280 meters/min for 80 minutes. The print scraps amounted to 400 meter corresponding to a weight of 4.5 kg.
Further, the extrusion daughter rolls were cut to obtain transformation daughter rolls, each having width 68 mm width, roll diameter 600 mm and film length 10,000 m. 18 rolls were overall obtained in two working cycles. Cutting was carried out at a line speed of about 600 m/min without the formation of creases and folds. The total amount of scraps in the transformation step (cutting + printing), net of trimmed edges, was lower than 3%.
From the transformation daughter rolls about 46,500 labels having length 215 mm and height (width) 68 mm by a roll-fed labelling machine were obtained, for application to 0.5 liter PET bottles.
The roll fed application lasted 2 hours. The line speed was up to 60,000 bottles/h (bph) (average speed line about 55,000 bph), and the label cut from the roll was found to be precise and clear, the print pitch regular and constant. The discarded bottles were 92 on about 115,000 (0.08%).
This example shows that the rolls of the films of the present invention can be used in roll-fed application to manufacture labels without jamming at a speed line also of 60,0000 bph).

EXAMPLE 7B

The printed transformation daughter rolls obtained in example 7A having film length 10,000 m, roll diameter 600 mm but width 85 mm, were used to obtain labels having length 287 mm and width 85 mm for application on a roll-fed labelling machine to 1.5 liter cylindrical PET bottles. The roll fed application lasted 2 hours. The line speed was up to 44,000 bph (average speed line 42,000 bph) and the label cut resulted precise and clearcut, the print pitch regular and constant. The discarded bottles were 43 over about 85,000 (0.05%).

EXAMPLE 7C

The printed transformation daughter rolls obtained in example 7A, having length 10,000 m, roll diameter 600 mm but width 85 mm, were used to obtain labels having length 320 mm and width 59 mm for application on a roll-fed labelling machine to 2.0 liter cylindrical PET bottles.

The roll fed application lasted 2 hours. The line speed was up to 36,000 bph (average speed 34,000 bph) and the label cut resulted precise and clearcut, the print pitch regular and constant.

The discarded bottles were 18 over about 70,000 (0,024%).

FORMULATION EXAMPLES

EXAMPLE 8

Example 7 was repeated but substituting in the core 94% of PP homopolymer with 69% of PP homopolymer + 25% of masterbatch of titanium dioxide (white 70) with polypropylene carrier. The masterbatches of amorphous resin and of antistatic were in the same amounts as in ex. 7. The thickness of each of the three layers was as in the film of example 4.

The characterization data are reported in Table 1.

The flexural rigidity of the film was $2.26 \times 10^{-2}$ N.mm.

The Young modulus of the film in TD direction was 3192 N/mm$^2$.

EXAMPLE 9

According to the process reported above a multilayer film was prepared, having thickness 15 $\mu$m and the following composition:

- core: 89% by weight PP homopolymer MFI 2, (HP522H LyondellBasell® polymers), + 10% by weight of masterbach of amorphous hydrocarbon resins in propylene homopolymer carrier Constab MA00929PP, + 1% by weight of antistatic agent ASPA2446 (Schulmann®) masterbatch with polypropylene carrier; the core thickness was 13 $\mu$m,
- skin 1: 99% by weight of a propylene homopolymer having MFI 2.0 (HP422H LyondelBasell® polymers), + 1% by weight of a silica masterbatch in propylene homopolymer carrier (AB 6001PP Schulmann® anti-block agent); the layer thickness was 1 $\mu$m,
- skin 2: 93% by weight of polypropylene homopolymer HP522H LyondellBasell® polymers), + 6% by weight of slip agent ABVT34SC (Schulmann®) masterbatch based on silicone particles having a 2 $\mu$m diameter, + 1% by weight of a silica masterbatch in polypropylene AB 6001PP; the layer thickness was of 1 $\mu$m.

The characterization data are reported in Table 2.

The flexural rigidity of the film was $1.22 \times 10^{-2}$ N.mm.

The Young modulus of the film in TD direction was 3107 N/mm$^2$.

EXAMPLE 10

Example 9 was repeated but the core thickness was 11 $\mu$m and the thickness of each skin layer was 2 $\mu$m.

The composition of skin 2 was 93% by weight of polypropylene homopolymer ADSTIFHA612M (LyonellBasell®) having MFI 6, + 6% by weight of slip agent ABVT34SC (Schulmann®) masterbatch based on silicone particles having a 2 $\mu$m diameter, + 1% by weight of a silica masterbatch in polypropylene AB 6001PP.

The characterization data are reported in Table 2.

The flexural rigidity of the film was $1.25 \times 10^{-2}$ N.mm.

The Young modulus of the film in TD direction was 3163 N/mm$^2$.

EXAMPLE 11

Example 9 was repeated but the layer composition was the following:

- core: 84% by weight of propylene homopolymer of example 9, + 10% by weight of reclaim (regranulated) propylene homopolymer, + 5% by weight of masterbach of amorphous hydrocarbon resins Constab MA00929PP, + 1% by weight of antistatic agent ASPA2446,
- skin 1: 100% by weight of propylene-ethylene copolymer having MFI=5.5,

- skin 2: 93% by weight of PP homopolymer, + 6% by weight of slip agent ABVT34SC (Schulmann®) masterbatch based on silicone particles having a 2 $\mu$m diameter, + 1% by weight of a silica masterbatch with polypropylene carrier (AB 6001PP Schulmann® anti-block agent).

The thickness of the layers was as in example 9.

The characterization data are reported in Table 2.

The flexural rigidity of the film was 1.0x10$^{-2}$ N.mm.

The Young modulus of the film in TD direction was 3050 N/mm$^2$.

COMPARATIVE APPLICATION EXAMPLE

EXAMPLE 12 Comparative

Example 7A was repeated but using a commercial film Stilan® TP 35 having thickness 35 $\mu$m.

The film length of the extrusion daughter rolls was of 13,500 m, that is about one half that of the corresponding rolls of example 7A (22,000 m). During the processing step it was compulsory to slow down line speed to change the rolls and make the relevant joints.

Therefore the printing step was discontinuous and with line speed changes with respect to that of example 7A.

The scraps obtained for 400 linear meters amounted to 8.26 Kg, that is about twice the scraps of example 7A.

Furthermore, being the diameter the same, with the transformation daughter roll of this example labels were about 28,000, about 40% less than those obtained with the transformation daughter roll of example 7A).

Table 1

| Ex. | Thickness μm | Core | Skin 1 (subjected to surface treatments) | Skin 2 | Ultimate tensile stress | Elongation in MD % | Elastic modulus in MD N/mm$^2$ | Dimensional stability in % | |
|---|---|---|---|---|---|---|---|---|---|
| | | | | | | | | MD | TD |
| 1 | 19 | PP Homopolymer | 99% PP homopolymer +1% silica masterbatch | 93% PP homopolymer +1% silica masterbatch +6% slip agent masterbatch | 226 | 102 | 3200 | - 7.3 | + 1.4 |
| 2 | 19 | 90% PP homopolymer + 10% masterbatch of amorphous resins | 99% PP homopolymer+1% silica masterbatch | 93% PP homopolymer +1% silica masterbatch + 6% slip agent masterbatch | 209 | 97 | 3800 | - 9 | + 0.9 |
| 3 | 19 | 89% PP homopolymer + 10% masterbatch of amorphious resins + 1% antistatic masterbatch | 99% PP homopolymer +1% silica masterbatch | 93% PP homopolymer +1% silica masterbatch + 6% slip agent masterbatch | 211 | 109 | 3596 | - 8.1 | + 0.7 |
| 4 | 19 | 89% PP homopolymer + 10% masterbatch of amorphous resins + 1% antistatic masterbatch | Copolymer P/E | 94% P/E copolymer + 6% slip agent masterbatch | 177 | 93 | 3170 | - 7.3 | + 1.4 |
| 5 | 19 | 89% PP homopolymer +10% masterbatch of amorphous resins + 1% antistatic masterbatch | P/E Copolymer | 93% PP homopolymer + 1% silica masterbatch +6% slip agent masterbatch | 213 | 121 | 3273 | - 7.3 | + 1.1 |
| 6 | 19 | 94% PP homopolymer + 5% masterbatch of amorphous resins + 1% antistatic masterbatch | 99% PP homopolymer +1% silica masterbatch | 93% PP homopolymer +1% silica masterbatch + 6% slip agent masterbatch | 206 | 111 | 3267 | - 7.4 | + 1.2 |
| 7 | 19 | 94% PP homopolymer +5% masterbatch of amorphous resins + 1% antistatic masterbatch | 99% PP homopolymer +1% silica masterbatch | 93% PP homopolymer +1% silica masterbatch + 6% slip agent masterbatch | 217 | 117 | 3100 | - 7.3 | + 1.0 |

| Ex. | Thickness μm | Core | Skin 1 (subjected to surface treatments) | Skin 2 | Ultimate tensile stress | Elongation in MD % | Elastic modulus in MD N/mm$^2$ | Dimensionalstability in % | |
|---|---|---|---|---|---|---|---|---|---|
| | | | | | | | | MD | TD |
| 8 | 19 | 69% PP homopolymer +5% masterbatch of amorphous resins + 1% antistatic masterbatch +25% masterbatch TiO$_2$ | 99% PP homopolymer +1% silicamasterbatch | 93% PP homopolymer +1% silica masterbatch + 6% slip agent masterbatch | 178 | 101 | 3297 | - 6.0 | + 1.0 |

EP 2 599 628 B1

Table 2

| Ex. | Thickness μm | Core | Skin 1 (subjected to surface treatments) | Skin 2 | Ultimate tensile stress in MD N/mm$^2$ | Elongation in MD % | Elastic modulus in MD N/mm$^2$ | Dimensionalstability in % | |
|---|---|---|---|---|---|---|---|---|---|
| | | | | | | | | MD | TD |
| 9 | 15 | 89% PP homopolymer + 10% masterbatch of amorphous resins + 1% antistatic masterbatch | 99% PP homopolymer + 1% silicamasterbatch | 93% PP homopolymer + 1% silica masterbatch + 6% slip agent masterbatch | 221 | 108 | 3612 | - 8.7 | + 1.5 |
| 10 | 15 | 89% PP homopolymer + 10% masterbatch of amorphous resins + 1% antistatic masterbatch | 99% PP homopolymer + 1% silicamasterbatch | 93% PP homopolymeer +1% silica masterbatch + 6% slip agent masterbatch | 215 | 105 | 3719 | - 8.2 | + 1.,3 |
| 11 | 15 | 94% PP homopolymer + 5% masterbatch of amorphous resins + 1% antistatic masterbatch | P/Ecopolymer | 93% PP homopolymer +1% silica masterbatch + 6% slip agent masterbatch | 212 | 104 | 3050 | - 8.1 | + 1.,2 |

EP 2 599 628 B1

**Claims**

1. Use of polyolefin-based plastic films for obtaining labels from rolls for high speed roll-fed applications higher than about 8,000 to about 75,000 containers/hour, the films having a thickness in the range from 10 to 22 $\mu$m, flexural rigidity (N.mm) in the range $0.5\times10^{-2}$-$4.5\times10^{-2}$ neglecting a constant $1/[12\times(1-v^2)]$ being v the Poisson modulus, an elongation at break in MD, determined according to ASTM D 882, lower than 130%, a dimensional stability, determined according to the OPMA TC 4 standard at 130°C for 5 minutes in air in MD in the range from 0 to -10% and in TD from -4 to +4%, the films obtainable by a simultaneous stretching process, during label application to containers the number of scraps being lower than 2%, during the transformation step the number of scraps being lower than 5%, net of trimmed edges.

2. Use of polyolefin-based plastic films according to claim 1 wherein the plastic films have an elastic modulus in TD lower than 3,500 N/mm$^2$ and in MD from 2,600 to 3,800 N/mm$^2$.

3. Use of polyolefin-based plastic films according to claim 2 wherein the polyolefin-based plastic films have an elastic modulus in TD lower than 3,500 N/mm$^2$ and in MD in the range from 3,000 to 3,600 N/mm$^2$.

4. Use of polyolefin-based plastic films according to claims 1-3 wherein the film thickness is in the range from 14 to 20 $\mu$m.

5. Use of polyolefin-based plastic films according to claims 1-4 wherein the flexural rigidity is in the range from $0.7\times10^{-2}$ to $3.5\times10^{-2}$ N.mm.

6. Use of polyolefin-based plastic films according to claim 5 wherein the flexural rigidity is in the range from $0.8\times10^{-2}$ to $3.0\times10^{-2}$ N.mm.

7. Use of polyolefin-based plastic films according to claim 6 wherein the flexural rigidity is in the range from $0.9\times10^{-2}$ to $2.8\times10^{-2}$ N.mm.

8. Use of polyolefin-based plastic films according to claims 1-7 wherein the elongation at break is lower than 120%.

9. Use of polyolefin-based plastic films according to claims 1-8 wherein the dimensional stability in MD is in the range from -4 to -8.5% and in TD in the range from 0 to +2.5%.

10. Use of polyolefin-based plastic films according to claims 1-9 wherein the tensile strength at break ranges from 228 to 170 N/mm$^2$.

11. Use of polyolefin-based plastic films according to claims 1-10 wherein the plastic films are based on propylene homopolymers having an extractable amount in n-hexane lower than 10% by weight as determined according to the FDA 177 1520 standard.

12. Use of polyolefin-based plastic films according to claims 1-11 wherein the plastic films are multilayers comprising:

   core: propylene homopolymers,
   skin layers, equal to or different from each other, based on propylene homopolymers and/or olefinic copolymers.

13. Use of polyolefin-based plastic films according to claim 12 wherein the olefinic copolymers of the skin layers are selected from copolymers of propylene with at least another ethylenic unsaturation containing comonomer, preferably selected from ethylene and alpha-olefins having a number of carbon atoms ranging from 4 to 12, the total comonomer amount being comprised between 0.5 and 25% by weight on the total monomers.

14. Use of polyolefin-based plastic films according to claims 12-13 wherein the propylene copolymers have a concentration of extractables lower than 10%.

15. Use of polyolefin-based plastic films according to claims 1-14 wherein the polyolefin-based plastic films have a thickness in the range from 14 to 20 $\mu$m, flexural rigidity from $0.7\times10^{-2}$ to $3.5\times10^{-2}$ N.mm, elongation at break in MD lower than 120%, elastic modulus in TD is lower than 3,500 N/mm$^2$ and in MD in the range from 3,000 to 3,600 N/mm$^2$, dimensional stability in MD in the range from -4 and -8.5%, and in TD from 0 to +2.5%.

16. Use of polyolefin-based plastic films according to claims 1-15 wherein the polyolefin-based plastic films have a thickness in the range 14-20 $\mu$m, flexural rigidity in the range $0.7 \times 10^{-2}$-$3.5 \times 10^{-2}$, elongation at break in MD determined according to ASTM D 882 lower than 120% and $\geq$90%, elastic modulus (N/mm$^2$) in TD lower than 3,500 and $\geq$2,700, in MD in the range 2,600-3,800, the tensile strength at break ranges from 228 to 170 N/mm$^2$, the dimensional stability of the multilayer film in MD is in the range from -4 to -8.5%, and in TD from 0 to + 2.5%.

17. Use of polyolefin-based plastic films according to claims 12-16 wherein the skin layers comprise optional components selected from slip agents and anti-blocking agents; the core layer comprises optional components selected from antistatic agents, dyestuffs, hydrogenated hydrocarbon resins in amounts from about 2% to 40% by weight on the total weight of the olefinic polymer plus the core hydrocarbon resin, propylene copolymers or ethylene copolymers in amounts from 0 to 20% with respect to the propylene homopolymer amount.

18. A process for preparing a plastic film as described in any one of claims 1-17 comprising the following steps:

- coextrusion of the film sheet;
- sheet cooling on the surface of cooled chill roll dipped in a water bath;
- sheet heating;
- sheet stretching and orientation by a simultaneous orientation process in MD and TD direction by taking the sheet edges, having an higher thickness than the sheet, with a series of pliers/clamps independently driven by linear synchronous induction motors, wherein the pliers/clamps set runs on divergent stretching rails;
- for the stretching step a stretching frame comprising one or more sections located inside an oven at temperatures comprised between about 150° and 190°C, is used;
- the MD longitudinal stretching ratios being comprised from about 4:1 to about 9:1 and the TD transversal stretching ratios from about 3:1 to about 8:1.
- heat setting in TD, preferably through a convergence of the stretching rails and heat setting in MD by decreasing the linear pliers speed.

19. Polyolefin-based plastic films as described in any one of claims 1-17.

20. Plastic films according to claim 19 wherein the elastic modulus in TD is lower than 3,500 N/mm$^2$ and in MD ranges from 2,600 to 3,800 N/mm$^2$, preferably from 3,000 to 3,600 N/mm$^2$.

21. Plastic films according to claim 19 obtainable by the process of claim 16.

22. Labels obtainable from plastic films of claims 19-21.

**Patentansprüche**

1. Verwendung von Kunststofffolien auf Polyolefinbasis zum Erhalten von Etiketten aus Rollen für schnelle Rollenzuführungsanwendungen höher als etwa 8.000 bis etwa 75.000 Behälter/Stunde, wobei die Folien eine Dicke im Bereich von 10 bis 22 $\mu$m, Biegesteifigkeit (N.mm) im Bereich 0, $5 \times 10^{-2}$-$4,5 \times 10^{-2}$, unter Vernachlässigung einer Konstante $1/[12 \times (1-v^2)]$ aufweisen, wobei v das Poisson-Modul, eine Bruchdehnung in MD, bestimmt nach ASTM D 882, niedriger als 130%, eine Dimensionsstabilität, bestimmt nach der Norm OPMA TC 4 bei 130 °C für 5 Minuten in der Luft in MD im Bereich von 0 bis -10% und in TD von -4 bis +4% ist, wobei die Folien durch ein gleichzeitiges Streckverfahren erhalten werden können, wobei während der Anwendung der Etikette auf den Containern die Anzahl der Schrotte niedriger als 2% ist, wobei während des Transformationsschritts die Anzahl der Schrotte niedriger als 5%, abzüglich der gestutzten Kanten, ist.

2. Verwendung von Kunststofffolien auf Polyolefinbasis nach Anspruch 1, wobei die Kunststofffolien ein Elastizitätsmodul in TD niedriger als 3.500 N/mm$^2$ und in MD von 2.600 bis 3.800 N/mm$^2$ aufweisen.

3. Verwendung von Kunststofffolien auf Polyolefinbasis nach Anspruch 2, wobei die Kunststofffolien auf Polyolefinbasis ein Elastizitätsmodul in TD niedriger als 3.500 N/mm$^2$ und in MD im Bereich von 3.000 bis 3.600 N/mm$^2$ aufweisen

4. Verwendung von Kunststofffolien auf Polyolefinbasis nach den Ansprüchen von 1 bis 3, wobei die Filmdicke im Bereich von 14 bis 20 $\mu$m liegt.

5. Verwendung von Kunststoffolien auf Polyolefinbasis nach den Ansprüchen von 1 bis 4, wobei die Biegesteifigkeit im Bereich von $0,7 \times 10^{-2}$ bis $3,5 \times 10^{-2}$ N.mm liegt.

6. Verwendung von Kunststofffolien auf Polyolefinbasis nach Anspruch 5, wobei die Biegesteifigkeit im Bereich von $0,8 \times 10^{-2}$ bis $3,0 \times 10^{-2}$ N.mm liegt.

7. Verwendung von Kunststofffolien auf Polyolefinbasis nach Anspruch 6, wobei die Biegesteifigkeit im Bereich von $0,9 \times 10^{-2}$ bis $2,8 \times 10^{-2}$ N.mm liegt.

8. Verwendung von Kunststoffolien auf Polyolefinbasis nach den Ansprüchen von 1 bis 7, wobei die Bruchdehnung niedriger als 120% ist.

9. Verwendung von Kunststofffolien auf Polyolefinbasis nach den Ansprüchen von 1 bis 8, wobei die Dimensionsstabilität in MD im Bereich von -4 bis -8,5% und in TD im Bereich von 0 bis + 2,5% liegt.

10. Verwendung von Kunststofffolien auf Polyolefinbasis nach den Ansprüchen von 1 bis 9, wobei die Zugfestigkeit bei Bruch im Bereich von 228 bis 170 $N/mm^2$ liegt.

11. Verwendung von Kunststoffolien auf Polyolefinbasis nach den Ansprüchen von 1 bis 10, wobei die Kunststofffolien auf Propylenhomopolymeren mit einer extrahierbaren Menge an n-Hexan niedriger als Gew. 10% basieren, bestimmt nach der Norm FDA 177 1520.

12. Verwendung von Kunststoffolien auf Polyolefinbasis nach den Ansprüchen von 1 bis 11, wobei die Kunststofffolien Mehrfachschichten sind, umfassend:

Kern: Propylenhomopolymere,
Deckschichten, gleich oder verschieden voneinander, auf der Basis von Propylenhomopolymeren und/oder olefinischen Copolymeren.

13. Verwendung von Kunststofffolien auf Polyolefinbasis nach Anspruch 12, wobei die olefinischen Copolymere der Deckschichten aus Copolymeren von Propylen mit mindestens einem anderen eine ethylenische Ungesättigtheit enthaltenden Comonomer, vorzugsweise ausgewählt aus Ethylen und alpha-Olefinen mit einer Anzahl an Kohlenstoffatomen im Bereich von 4 bis 12, wobei die gesamte Comonomermenge zwischen 0,5 und 25 Gew .-% der Gesamtmonomere liegt.

14. Verwendung von Kunststofffolien auf Polyolefinbasis nach den Ansprüchen von 12 bis 13, wobei die Propylencopolymere eine Konzentration an Extrahierbaren niedriger als 10% aufweisen.

15. Verwendung von Kunststofffolien auf Polyolefinbasis nach den Ansprüchen von 1 bis 14, wobei die Kunststofffolien auf Polyolefinbasis eine Dicke im Bereich von 14 bis 20 $\mu$m, Biegesteifigkeit von $0,7 \times 10^{-2}$ bis $3,5 \times 10^{-2}$ N.mm, Bruchdehnung in MD niedriger als 120% aufweisen, Elastizitätsmodul in TD ist niedriger als 3.500 $N/mm^2$ und in MD im Bereich von 3.000 bis 3.600 $N/mm^2$, Dimensionsstabilität in MD im Bereich von -4 und -8,5%, und in TD von 0 bis +2,5%.

16. Verwendung von Kunststofffolien auf Polyolefinbasis nach den Ansprüchen von 1 bis 15, wobei die Kunststofffolien auf Polyolefinbasis eine Dicke im Bereich von 14 bis 20 $\mu$m, Biegesteifigkeit im Bereich von $0,7 \times 10^{-2}$-$3,5 \times 10^{-2}$, Bruchdehnung in MD bestimmt nach ASTM D 882 niedriger als 120% und $\geq$90%, Elastizitätsmodul ($N/mm^2$) in TD niedriger als 3.500 und $\geq$2.700, in MD im Bereich 2.600-3.800 aufweisen, die Zugfestigkeit bei Bruch liegt im Bereich von 228 bis 170 $N/mm^2$ , die Dimensionsstabilität der mehrschichtigen Folie in MD liegt im Bereich von -4 bis -8,5%, und in TD von 0 bis +2,5%.

17. Verwendung von Kunststoffolien auf Polyolefinbasis nach den Ansprüchen von 12 bis 16, wobei die Deckschichten optionale Komponenten umfassen, die aus Gleitmitteln und Antiblockiermitteln ausgewählt werden; die Kernschicht umfasst optionale Komponenten, ausgewählt aus antistatischen Mitteln, Farbstoffen, hydrierten Kohlenwasserstoffharzen in Mengen von etwa 2 bis 40 Ges.-%, auf dem Gesamtgewicht des olefinischen Polymers nebst dem Kernkohlenwasserstoffharz, Propylencopolymeren oder Ethylencopolymeren in Mengen von 0 bis 20% in Bezug auf die Propylenhomopolymermenge.

**18.** Verfahren zur Vorbereitung einer Kunststofffolie wie geschrieben nach einem der Ansprüche von 1 bis 17, umfassend die folgenden Schritte:

- Koextrusion der Folienbahn;
- Abkühlen der Bahn auf der Oberfläche der gekühlten Kühlwalze, die in einem Wasserbad getaucht wird;
- Heizen der Bahn
- Strecken und Orientieren der Bahn durch ein gleichzeitiges Orientierungsverfahren in MD- und TD-Richtung, indem die Bahnkanten, die eine höhere Dicke als die Bahn aufweisen, mit einer Reihe von Zangen/Klemmen, die unabhängig von linearen Synchron-Asynchronmotoren angetrieben werden, gegriffen werden, wobei der eingestellte Zangen/Klemmen-Satz auf divergierenden Streckschienen läuft;
- für den Streckschritt wird ein Streckrahmen umfassend einen oder mehrere Abschnitte, die sich in einem Ofen bei Temperaturen zwischen etwa 150° und 190°C befinden, verwendet;
- wobei die MD-Längsstreckverhältnisse von etwa 4:1 bis etwa 9:1 und die TD-Querstreckverhältnisse von etwa 3:1 bis etwa 8:1 liegen.
- Thermofixieren in TD, vorzugsweise durch eine Konvergenz der Streckschienen und Thermofixieren in MD durch Verringerung der linearen Zangengeschwindigkeit.

**19.** Kunststofffolien auf Polyolefinbasis wie geschrieben nach einem der Ansprüche von 1 bis 17.

**20.** Kunststofffolien nach Anspruch 19, wobei das Elastizitätsmodul in TD niedriger als 3.500 N/mm$^2$ ist und in MD von 2.600 bis 3.800 N/mm$^2$, vorzugsweise von 3.000 bis 3.600 N/mm$^2$ liegt

**21.** Kunststofffolien nach Anspruch 19, erhältlich durch das Verfahren nach Anspruch 16.

**22.** Etiketten, erhältlich aus Kunststoffolien nach den Ansprüchen von 19 bis 21.

**Revendications**

**1.** Utilisation de films en plastique à base de polyoléfine pour obtenir des étiquettes à partir de rouleaux pour des applications à aménage à rouleaux à grande vitesse allant d'environ 8 000 à environ 75 000 récipients/heure, les films ayant une épaisseur comprise entre 10 et 22 $\mu$m, une rigidité à la flexion (N.mm) comprise entre 0,5x10$^{-2}$ et 4,5x10$^{-2}$ en négligeant une constante 1/[12x(1-v$^2$)] où v est le coefficient de Poisson, un allongement à la rupture en MD, déterminé selon ASTM D 882, inférieur à 130 %, une stabilité dimensionnelle, déterminée selon la norme OPMA TC 4 à 130 °C pendant 5 minutes à l'air en MD comprise entre 0 et -10 % et en TD entre -4 et +4 %, les films pouvant être obtenus par un processus d'étirement simultané, lors de l'application d'étiquettes aux récipients, la quantité de déchets étant inférieure à 2 %, lors de l'étape de transformation, la quantité de déchets étant inférieure à 5 %, au net des bords rognés.

**2.** Utilisation de films en plastique à base de polyoléfine selon la revendication 1, dans laquelle les films en plastique comportent un module d'élasticité en TD inférieur à 3 500 N/mm$^2$ et compris entre 2 600 et 3 800 N/mm$^2$ en MD.

**3.** Utilisation de films en plastique à base de polyoléfine selon la revendication 2, dans laquelle les films en plastique à base de polyoléfine comportent un module d'élasticité en TD inférieur à 3 500 N/mm$^2$ et compris entre 3 000 et 3 600 N/mm$^2$ en MD.

**4.** Utilisation de films en plastique à base de polyoléfine selon les revendications de 1 à 3, dans laquelle l'épaisseur du film est comprise entre 14 et 20 $\mu$m.

**5.** Utilisation de films en plastique à base de polyoléfine selon les revendications de 1 à 4, dans laquelle la rigidité à la flexion est comprise entre 0,7x10$^{-2}$ et 3,5x10$^{-2}$ N.mm.

**6.** Utilisation de films en plastique à base de polyoléfine selon la revendication 5, dans laquelle la rigidité à la flexion est comprise entre 0,8x10$^{-2}$ à 3,0x10$^{-2}$ N.mm.

**7.** Utilisation de films en plastique à base de polyoléfine selon la revendication 6, dans laquelle la rigidité à la flexion est comprise entre 0,9x10$^{-2}$ et 2,8x10$^{-2}$ N.mm.

8. Utilisation de films en plastique à base de polyoléfine selon les revendications de 1 à 7, dans laquelle l'allongement à la rupture est inférieur à 120 %.

9. Utilisation de films en plastique à base de polyoléfine selon les revendications de 1 à 8, dans laquelle la stabilité dimensionnelle en MD est comprise entre -4 et 8,5 % et en TD entre 0 et 2,5 %.

10. Utilisation de films en plastique à base de polyoléfine selon les revendications de 1 à 9, dans laquelle la résistance à la rupture par traction est comprise entre 228 et 170 N/mm$^2$.

11. Utilisation de films en plastique à base de polyoléfine selon les revendications de 1 à 10, dans laquelle les films en plastique sont à base d'homopolymères de propylène ayant une quantité extractible en n- hexane inférieure à 10 % en poids selon la procédure décrite dans la norme FDA 177 1520.

12. Utilisation de films en plastique à base de polyoléfine selon les revendications de 1 à 11, dans laquelle les films en plastique sont des multicouches comprenant :

> couche centrale : homopolymères de propylène,
> des couches externes, égales ou différentes les unes des autres, à base d'homopolymères de propylène et/ou de copolymères oléfiniques.

13. Utilisation de films en plastique à base de polyoléfine selon la revendication 12, dans laquelle les copolymères oléfiniques des couches externes sont sélectionnés à partir de copolymères de propylène avec au moins un autre comonomère contenant une insaturation éthylénique, de préférence sélectionné à partir d'éthylène et d'alpha-oléfines comportant un nombre d'atomes de carbone compris entre 4 et 12, le nombre total de comonomères étant compris entre 0,5 et 25 % en poids du total de monomères.

14. Utilisation de films en plastique à base de polyoléfine selon les revendications de 12 à 13, dans laquelle les copolymères de propylène ont une concentration d'extractibles inférieure à 10 %.

15. Utilisation de films en plastique à base de polyoléfine selon les revendications de 1 à 14, dans laquelle les films en plastique à base de polyoléfine ont une épaisseur comprise entre 14 et 20 $\mu$m, une rigidité à la flexion comprise entre 0,7x10$^{-2}$ et 3,5x10$^{-2}$ N.mm, un allongement à la rupture en MD inférieur à 120 %, un module d'élasticité en TD inférieur à 3 500 N/mm$^2$ et en MD compris entre 3 000 et 3 600 N/mm$^2$, une stabilité dimensionnelle en MD comprise entre -4 et - 8,5 %, et en TD entre 0 et +2,5 %.

16. Utilisation de films en plastique à base de polyoléfine selon les revendications de 1 à 15, dans laquelle les films en plastique à base de polyoléfine ont une épaisseur comprise entre 14 et 20 $\mu$m, une rigidité à la flexion comprise entre 0,7x10$^{-2}$ et 3,5x10$^{-2}$, un allongement à la rupture en MD déterminé selon ASTM D 882 inférieur à 120 % et $\geq$ 90 %, un module d'élasticité (N/mm$^2$) en TD inférieur à 3 500 et $\geq$ 2 700, en MD compris entre 2 600 et 3 800, la résistance à la rupture par traction comprise entre 228 et 170 N/mm$^2$, la stabilité dimensionnelle du film multicouche en MD est comprise entre -4 et -8,5 %, et en TD entre 0 et +2,5 %.

17. Utilisation de films en plastique à base de polyoléfine selon les revendications de 12 à 16, dans laquelle les couches externes comprennent des composants optionnels sélectionnés à partir d'agents glissants et d'agents antiadhérents ; la couche principale comprend des composants optionnels sélectionnés à partir d'agents antistatiques, de colorants, de résines d'hydrocarbure hydrogéné dans une quantité comprise entre environ 2 % et 40 % en poids du poids total en polymère oléfinique plus la résine d'hydrocarbure de la couche centrale, des copolymères de propylène ou des copolymères d'éthylène dans une quantité comprise entre 0 et 20 % par rapport à la quantité d'homopolymère de propylène.

18. Procédé de préparation d'un film en plastique tel que décrit dans l'une quelconque des revendications de 1 à 17 comprenant les étapes suivantes :

> - coextrusion de la feuille de film ;
> - refroidissement de la feuille sur la surface d'un rouleau refroidi plongé dans un bain d'eau ;
> - chauffage de la feuille ;
> - étirement et orientation de la feuille par un processus d'orientation simultanée dans les directions MD et TD en prenant les bords de feuille, ayant une épaisseur supérieure à la feuille, avec une série de pinces/brides de serrage indépendamment entraînées par des moteurs à induction synchrone linéaires, dans lequel l'ensemble de pinces/brides de serrage effectue des courses sur des rails d'étirement divergents ;
- un châssis d'étirement utilisé pour l'étape d'étirement comprenant une ou plusieurs sections situées à l'intérieur d'un four ayant des températures comprises entre environ 150 et 190 °C ;
- les rapports d'étirement longitudinal MD étant compris entre environ 4:1 et environ 9:1 et les rapports d'étirement transversal TD entre environ 3:1 à environ 8:1.
- thermofixation en TD, de préférence par une convergence des rails d'étirement et thermofixation en MD par la diminution de la vitesse linéaire des pinces.

**19.** Films en plastique à base de polyoléfine tels que décrits selon l'une quelconque des revendications de 1 à 17.

**20.** Films en plastique selon la revendication 19, dans lesquels le module d'élasticité en TD est inférieur à 3 500 N/mm$^2$ et est compris entre 2 600 et 3 800 N/mm en MD, de préférence entre 3 000 et 3 600 N/mm$^2$.

**21.** Films en plastique selon la revendication 19 pouvant être obtenus par le procédé selon la revendication 16.

**22.** Étiquettes pouvant être obtenues à partir de films en plastique selon les revendications de 19 à 21.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020032295 A
- US 5118566 A
- EP 79520 A
- US 4595738 A
- US 3937762 A
- US 4921749 A
- US 20030148119 A
- CA 2047469
- EP 1074593 A
- EP 928273 A
- US 4853602 A
- US 5051225 A